# EUROPÄISCHE PATENTSCHRIFT

(11) **EP 0 483 564 B1**
(45) Veröffentlichungstag und Bekanntmachung des Hinweises auf die Patenterteilung: **15.06.1994**
(21) Anmeldenummer: 91117252.6
(22) Anmeldetag: 10.10.1991
(51) Int. Cl.: F16H 7/08

(54) **Hydraulische Spannvorrichtung für Riemen oder Ketten**
Hydraulic tensioner for belts or chains
Tendeur hydraulique pour courroies ou chaînes

(30) Priorität: 31.10.1990 DE 4034670
(43) Veröffentlichungstag der Anmeldung: 06.05.1992
(73) Patentinhaber: INA Wälzlager Schaeffler KG, 91063 Herzogenaurach (DE)
(72) Erfinder: Schmidt, Dieter, W-8500 Nürnberg (DE); Schuseil, Bolko, Dipl.-Ing., W-8555 Adelsdorf (DE)

(56) Entgegenhaltungen:
- EP-A- 0 289 814
- DE-C- 849 938
- FR-A- 2 526 908

## Beschreibung

### Hydraulische Spannvorrichtung für Riemen oder Ketten

Die Erfindung betrifft eine hydraulische Spannvorrichtung für Riemen oder Ketten, mit einem Zylinder und einem darin geführten, mit dem Zylinder einen Leckspalt bildenden Kolben, hinter welchem in dem Zylinder ein mit Öl gefüllter Druckraum angeordnet ist, der über ein Rückschlagventil mit einer Öleintrittsöffnung verbunden ist, mit einer den Kolben in Spannrichtung aus dem Zylinder herausbewegenden Druckfeder und mit einer in dem Kolben angeordneten Druckmittelleitung, die über ein weiteres Rückschlagventil mit dem Druckraum verbunden ist, wobei für die Reduzierung des aus dem Kolben austretenden Öls der Druckmittelleitung ein Leckspalt zugeordnet ist.

Umlaufende Riemen und Ketten tendieren mit ihren zwischen zwei Umlenkrädern befindlichen Bereichen zur Ausführung von Flatterbewegungen, insbesondere beim Schnellauf. In solchen Fällen kommen in der Regel hydraulisch arbeitende Spannvorrichtungen zum Einsatz, welche die Flatterbewegungen abdämpfen.

Bei einer aus der DE-C-849 938 bekannten Spannvorrichtung dient das in der Druckmittelleitung des Kolbens eingesetzte Rückschlagventil einer Druckentlastung in dem Öldruckraum des Zylinders, also an der zylinderseitigen Stirnfläche des Kolbens. Damit ergibt sich eine Entlastung der Spannvorrichtung und somit des Riemens bzw. der Kette. Das zusätzliche Rückschlagventil weist hier einen konischen Ventilkörper auf, der bei geschlossenem Ventil an einer Ringkante des Kolbens anliegt. Daher läßt dieses Rückschlagventil nur eine Ein- bzw. Ausschaltung zu. Der in dem Druckraum des Zylinders an der inneren Stirnfläche des Kolbens anstehende Öldruck wird durch das Öffnen dieses Ventils sprunghaft abgesenkt, so daß sich auch die Dämpfungswirkung der Spannvorrichtung infolge des Leckspalts sprunghaft ändert, durch den das Öl bei geschlossenem Ventil hindurchströmen muß.

Aus der FR-A-2 526 908 ist eine Spannvorrichtung der eingangs genannten Art bekannt, bei der die Druckmittelleitung des Kolbens von einem zusätzlichen Drosselstopfen verschlossen ist, der mit einem Außengewinde versehen sein muß, damit er in eine Gewinderillen aufweisende Bohrung des Kolbens von einer Stirnseite aus eingeschraubt werden kann. Dabei bilden die Gewinderillen mit dem Drosselstopfen einen Leckspalt. Diese Ausführung hat den Nachteil, daß sie insgesamt konstruktiv sehr aufwendig ist.

Bei hydraulischen, beispielsweise an Kraftfahrzeugmotoren verwendeten Spannvorrichtungen ändert sich die Absinkgeschwindigkeit des Kolbens in dem Zylinder in Abhängigkeit von der Ölviskosität, die die Flüssigkeitsreibung in dem Leckspalt und damit die Dämpfungswirkung der Vorrichtung bestimmt. Dies hat zur Folge, daß bei kaltem Motor und hoher Ölviskosität mit hohen Dämpfungskräften zu rechnen ist, während bei warmem Motor und geringerer Ölviskosität die Dämpfungskräfte geringer sind. Es liegt also eine Abhängigkeit der Dämpfungscharakteristik von der Ölviskosität und damit von der Temperatur vor. Mit der Erfindung sollen die Dämpfungskräfte bei kaltem Motor denjenigen bei heißem Motor angeglichen werden.

Der Erfindung liegt die Aufgabe zugrunde, eine möglichst einfach aufgebaute Spannvorrichtung mit verbesserter Dämpfungscharakteristik der Kolbenbewegung zu schaffen. Die Spannvorrichtung soll so weiter gebildet werden, daß die Kolbenbewegung von unterschiedlichen Temperaturen und den damit veränderlichen Viskositätswerten des Drucköls nach Möglichkeit unabhängig ist. Eine Druckänderung des Öls infolge der Öffnung des weiteren Rückschlagventils soll dabei nicht sprunghaft sondern stetig erfolgen, damit auch die Dämpfungswirkung sich nicht sprunghaft verändern kann.

Diese Aufgabe wird nach einem ersten Vorschlag erfindungsgemäß dadurch gelöst, daß der Leckspalt der Druckmittelleitung ein Teil des zwischen dem Zylinder und dem Kolben befindlichen Leckspaltes ist. Der Leckspalt der Druckmittelleitung bewirkt, daß das Öl nach Öffnung des weiteren Ventils infolge der Flüssigkeitsreibung auch aus der Druckmittelleitung des Kolbens nur begrenzt abfließen kann. Dieses wird ohne konstruktive Einwirkung auf Gestalt und Länge des Leckspaltes zwischen dem Kolben und dem Zylinder erreicht. Damit ergibt sich eine Möglichkeit der Reduzierung der Auswirkung des zwischen dem Zylinder und dem Kolben befindlichen Leckspaltes auf die Dämpfung.

Da der Leckspalt der Druckmittelleitung ein Teil des zwischen dem Zylinder und dem Kolben befindlichen Leckspaltes ist, wird die wirksame Länge des zwischen dem Zylinder und dem Kolben befindlichen Leckspaltes verkürzt und damit dessen Wirksamkeit verringert. Dabei kann die Druckmittelleitung über eine radiale Bohrung des Kolbens mit dem Leckspalt verbunden sein, wobei der der Druckmittelleitung zugeordnete Leckspalt von der axialen Länge des Leckspaltes gebildet wird, die sich zwischen der radialen Bohrung und dem offenen Ende des Zylinders ergibt. Die radiale Bohrung kann in eine in die Mantelfläche des Kolbens eingearbeitete Ringnut einmünden.

Zur Reduzierung der Auswirkung des Leckspaltes zwischen dem Kolben und dem Zylinder ist nach einem weiteren Vorschlag der Erfindung das weitere Rückschlagventil als Nadelventil ausgebildet, welches von einer in dem Kolben befindlichen Aufnahmebohrung und einer darin eingesetzten Ventilnadel gebildet ist, wobei sich zwischen dem Kolben und der Aufnahmebohrung der zusätzliche Leckspalt befindet. Dieser zweite Leckspalt, der parallel zu dem zwischen dem Kolben und dem Zylinder befindlichen Leckspalt angeordnet sein kann, führt zu einer Vergrößerung des gesamten Leckspaltquerschnitts, hat also die Wirkung, als wäre der erste Leckspalt verkürzt.

Bei einer solchen Ausführung kann die Länge der Aufnahmebohrung kürzer als die axiale Länge der Ventilnadel sein. Bei Verschiebung der Ventilnadel in der Aufnahmebohrung ändert sich der zweite Leckspalt in seiner Länge. Diese Veränderung führt dann zu einer Veränderung der gesamten Leckspaltwirkung, also einschließlich der Wirkung des ersten Leckspalts, der zwischen dem Kolben und dem Zylinder liegt.

Die erfindungsgemäßen Ausbildungen führen zu Spannvorrichtungen, auf welche temperaturbedingte Viskositätsänderungen fast keinen Einfluß mehr haben. Bei kaltem Drucköl mit hoher Viskosität ist infolge der Flüssigkeitsreibung in dem ersten Leckspalt auch der Öldruck größer als bei warmem Drucköl. Der höhere Druck führt zu einem Öffnen des zweiten Rückschlagventils, was insgesamt eine Verringerung der Flüssigkeitsreibung zur Folge hat. Auf diese Weise wird eine temperaturunabhängige Dämpfung erreicht.

Ausführungsbeispiele der Erfindung sind in der Zeichnung dargestellt und werden im folgenden näher beschrieben. Es zeigen:
- Figur 1: einen Längsschnitt durch eine erste Ausführungsform der erfindungsgemäßen Vorrichtung;
- Figur 2: einen Längsschnitt durch eine zweite Ausführungsform der erfindungsgemäßen Vorrichtung und
- Figur 3: einen Längsschnitt durch eine Weiterbildung der zweiten Ausführungsform.

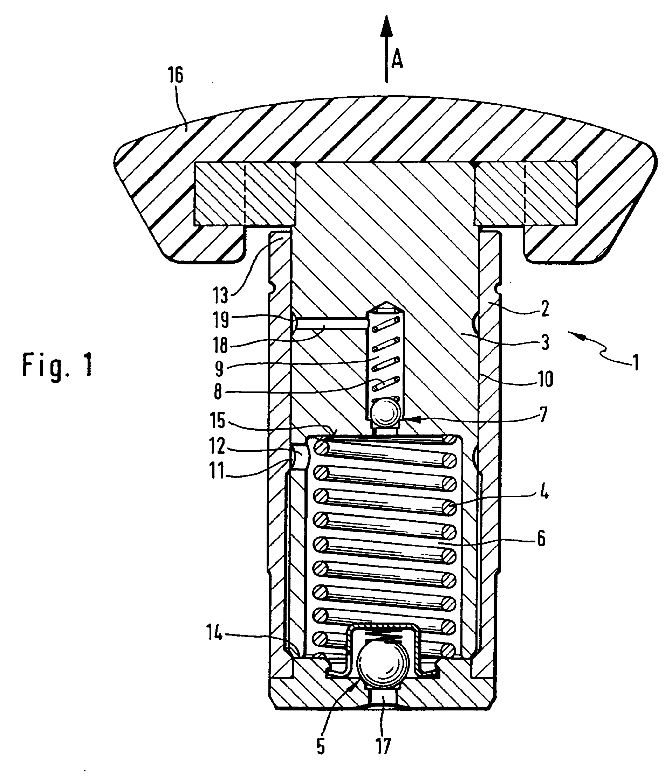

Die erfindungsgemäße Spannvorrichtung 1 gemäß Figur 1 der Zeichnung besteht aus einem Zylinder 2, einem darin verschiebbar angeordneten Kolben 3, einer auf den Kolben einwirkenden Druckfeder 4, einem ersten Rückschlagventil 5 in einem Druckölraum 6 des Zylinders und einem zweiten Rückschlagventil 7 mit einer Druckfeder 8, die in einer Druckmittelleitung 9 in dem Kolben angeordnet sind. Die Druckfeder 8 dient der Einstellung des Ventilöffnungsdruckes.

Der Kolben 3 ist unter der Einwirkung der Druckfeder 4 in Spannrichtung A der Vorrichtung 1 verschiebbar, und zwar unter Belassung eines ringförmigen Leckspaltes 10 zwischen dem Zylinder 2 und dem Kolben 3. Der Leckspalt 10 erstreckt sich in axialer Richtung zwischen der jeweiligen Lage des Mündungsbereiches 11 einer Verbindungsbohrung 12 zwischen dem Druckölraum 6 und der Außenseite des Kolbens 3 einerseits und dem offenen Ende 13 des Zylinders 2 andererseits. Jeder axialen Relativstellung zwischen dem Zylinder 2 und dem Kolben 3 entspricht somit eine bestimmte Länge des Leckspaltes 10.

Die Druckfeder 4 stützt sich an der inneren Stirnfläche 14 des Zylinders 2 und einer der Stirnfläche 14 zugewandten Fläche 15 des Kolbens 3 ab. Sie wirkt auf den Kolben 3 und damit auf den dargestellten Gleitschuh 16 zum Spannen eines Riemens oder einer Kette in Spannrichtung A ein.

Beim Hineindrücken des Kolbens 3 in den Zylinder 2 und infolge der dadurch bedingten Verkleinerung des Druckölraums 6 muß das Drucköl über die Verbindungsbohrung 12 und den Leckspalt 10 nach außen austreten, weil ihm eine Rückströmung durch das erste Rückschlagventil 5 zu einer Öleintrittsöffnung 17 versagt ist.

Wegen der Temperaturabhängigkeit der Viskosität des Drucköls ist dessen Fließverhalten im Leckspalt 10 veränderlich. Bei hohen Temperaturen ist die Zähigkeit und damit die Dämpfungswirkung des Drucköls geringer, als bei niedrigen Temperaturen. Die Dämpfungswirkung hängt auch von der axialen Länge des ringförmigen Leckspaltes 10 ab. Um den Einfluß von Temperaturänderungen auf die Dämpfung zu verringern, ist in dem Kolben 3 der hinter dem zweiten Rückschlagventil 7 befindliche Teil der Druckmittelleitung 9 über eine radiale Bohrung 18 mit der Außenseite des Kolbens 3 verbunden. Die Bohrung 18 mündet dort in eine Ringnut 19 des Kolbens 3 ein. Bei geschlossenem zweiten Rückschlagventil 7 ist die wirksame axiale Länge des Leckspaltes 10 die Länge zwischen dem Mündungsbereich 11 der Verbindungsbohrung 12 und dem offenen Ende 13 des Zylinders 2. Bei geöffnetem zweiten Rückschlagventil 7 dagegen ist die wirksame axiale Länge des Leckspaltes 10 auf die Länge zwischen der Ringnut 19 des Kolbens 3 und dem offenen Ende 13 des Zylinders 2 reduziert. Da das Öffnen des zweiten Rückschlagventils 7 beim Hineinschieben des Kolbens 3 in den Zylinder 2 von dem dabei auftretenden Öldruck bewirkt wird und da dieser von der temperaturabhängigen Fließfähigkeit des Öls in dem Leckspalt 10 abhängt, verringert sich die wirksame Länge des Leckspaltes 10 beim Erreichen einer bestimmten Temperatur des Öls.

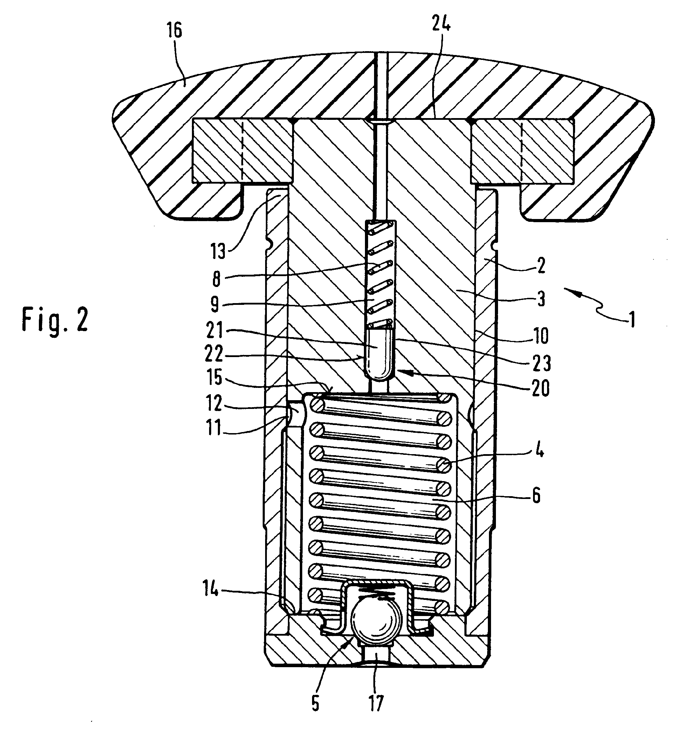

Von dieser Spannvorrichtung unterscheidet sich die Ausführungsform gemäß Figur 2 der Zeichnung dadurch, daß das zweite Rückschlagventil hier nicht als Kugelventil, sondern als Nadelventil 20 mit einer Ventilnadel 21 und einer Aufnahmebohrung 22 ausgeführt ist. Dabei ergibt sich zwischen der Ventilnadel 21 und der Aufnahmebohrung 22 ein zweiter Leckspalt 23, durch den das Öl beim Hineindrücken des Kolbens 3 in den Zylinder 2 hindurchströmen kann.

In diesem Fall wird zwar die jeweilige Länge des Leckspaltes 10 zwischen dem Zylinder 2 und dem Kolben 3 praktisch nicht verändert, jedoch wird mit dem zweiten Leckspalt 23 eine zusätzliche Austrittsmöglichkeit für das Öl geschaffen und damit der Leckspalteinfluß insgesamt verändert.

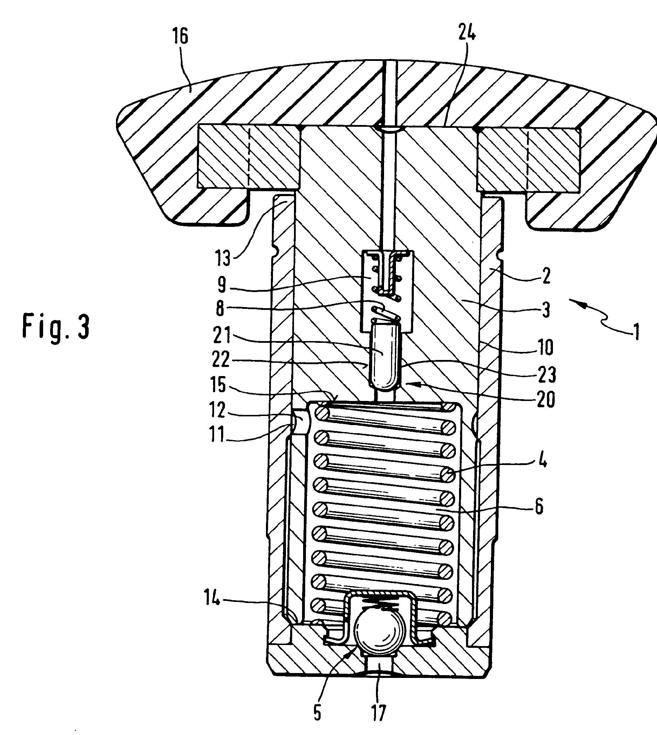

Bei der Ausführungsform gemäß Figur 3 der Zeichnung ist die axiale Länge des zweiten Leckspalts 23 von der Lage der Ventilnadel 21 in der Aufnahmebohrung 22 abhängig, da die Länge der Aufnahmebohrung 22 kürzer als die Länge der Ventilnadel 21 ist. Hier wird also in Abhängigkeit von der Öltemperatur und der gegenseitigen Stellung von Ventilnadel 21 und Aufnahmebohrung 22 eine veränderliche Wirkung des zweiten Leckspaltes 23 und damit eine Beeinflussung der Wirkung des ersten, zwischen dem Zylinder 2 und dem Kolben 3 befindlichen Leckspaltes 10 erreicht.

Bei beiden Varianten der zweiten Ausführungsform ist der hinter dem Nadelventil 20 als zweitem Rückschlagventil gelegene Teil der Druckmittelleitung 9 über die Stirnfläche 24 des Kolbens 3 hinaus durch den Gleitschuh 16 hindurch nach außen geführt, so daß durch das Nadelventil 20 hindurchströmendes Öl frei austreten kann.

## Patentansprüche

1. Hydraulische Spannvorrichtung für Riemen oder Ketten, mit einem Zylinder (2) und einem darin geführten, mit dem Zylinder (2) einen Leckspalt (10) bildenden Kolben (3), hinter welchem in dem Zylinder (2) ein mit Öl gefüllter Druckraum (6) angeordnet ist, der über ein Rückschlagventil (5) mit einer Öleintrittsöffnung (17) verbunden ist, mit einer den Kolben (3) in Spannrichtung aus dem Zylinder (2) herausbewegenden Druckfeder (4) und einer in dem Kolben (3) angeordneten Druckmittelleitung (9), die über ein weiteres Rückschlagventil (7, 20) mit dem Druckraum (6) verbunden ist, wobei für die Reduzierung des aus dem Kolben (3) austretenden Öls der Druckmittelleitung (9) ein Leckspalt zugeordnet ist, **dadurch** **gekennzeichnet**, daß der Leckspalt der Druckmittelleitung (9) ein Teil des zwischen dem Zylinder (2) und dem Kolben (3) befindlichen Leckspaltes (10) ist.

2. Spannvorrichtung nach Anspruch 1, **dadurch** **gekennzeichnet**, daß die Druckmittelleitung (9) über eine radiale Bohrung (18) des Kolbens (3) mit dem Leckspalt (10) verbunden ist, wobei der der Druckmittelleitung (9) zugeordnete Leckspalt von der axialen Länge des Leckspaltes (10) gebildet wird, die sich zwischen der radialen Bohrung (18) und dem offenen Ende (13) des Zylinders (2) ergibt.

3. Spannvorrichtung nach Anspruch 2, **dadurch** **gekennzeichnet**, daß die radiale Bohrung (18) in eine in die Mantelfläche des Kolbens (3) eingearbeitete Ringnut (19) einmündet.

4. Spannvorrichtung nach einem der Ansprüche 1 bis 3, **dadurch** **gekennzeichnet**, daß das weitere Rückschlagventil ein Kugel-Rückschlagventil (7) ist.

5. Hydraulische Spannvorrichtung für Riemen oder Ketten, mit einem Zylinder (2) und einem darin geführten, mit dem Zylinder (2) einen Leckspalt (10) bildenden Kolben (3), hinter welchem in dem Zylinder (2) ein mit Öl gefüllter Druckraum (6) angeordnet ist, der über ein Rückschlagventil (5) mit einer Öleintrittsöffnung (17) verbunden ist, mit einer den Kolben (3) in Spannrichtung aus dem Zylinder (2) herausbewegenden Druckfeder (4) und einer in dem Kolben (3) angeordneten Druckmittelleitung (9), die über ein weiteres Rückschlagventil (7, 20) mit dem Druckraum (6) verbunden ist, wobei für die Reduzierung des aus dem Kolben (3) austretenden Öls der Druckmittelleitung (9) ein Leckspalt zugeordnet ist, **dadurch** **gekennzeichnet**, daß das weitere Rückschlagventil als Nadelventil (20) ausgebildet ist, welches von einer in dem Kolben (3) befindlichen Aufnahmebohrung (22) und einer darin eingesetzten Ventilnadel (21) gebildet ist, wobei sich zwischen der Ventilnadel (21) und der Aufnahmebohrung (22) ein zusätzlicher Leckspalt (23) befindet.

6. Spannvorrichtung nach Anspruch 5, **dadurch** **gekennzeichnet**, daß die axiale Länge der Ventilnadel (21) größer ist, als die Länge der Aufnahmebohrung (22).

7. Spannvorrichtung nach Anspruch 5 oder 6, **dadurch** **gekennzeichnet**, daß der von dem Druckölraum (6) abgewandte, hinter dem Nadelventil (20) befindliche Teil der Druckmittelleitung (9) in die Stirnfläche (24) des Kolbens (3) einmündet.

## Claims

1. Hydraulic tensioner for belts or chains comprising a cylinder (2) with a piston (3) guided therein which forms a leak gap (10) with the cylinder (2) and behind which an oil-filled pressure chamber (6) communicating with an oil inlet opening (17) via a non-return valve (5) is arranged in the cylinder (2), the tensioner also comprising a compression spring (4) which moves the piston (3) in the tensioning direction out of the cylinder (2), and a pressure medium duct (9) arranged in the piston (3) and communicating with the pressure chamber (6) via a further non-return valve (7, 20), a leak gap for reducing the amount of oil flowing out of the piston (3) being associated with the pressure medium duct (9), characterized in that the leak gap of the pressure medium duct (9) is a part of the leak gap (10) existing between the cylinder (2) and the piston (3).

2. Tensioner according to claim 1, characterized in that the pressure medium duct (9) is connected by a radial bore (18) of the piston (3) with the leak gap (10), the leak gap associated with the pressure medium duct (9) being formed by the axial length of the leak gap (10) which results between the radial bore (18) and the open end (13) of the cylinder (2).

3. Tensioner according to claim 2, characterized in that the radial bore (18) opens into an annular groove (19) made in the peripheral surface of the piston (3).

4. Tensioner according to one of the claims 1 to 3, characterized in that the further non-return valve is a ball non-return valve (7).

5. Hydraulic tensioner for belts or chains comprising a cylinder (2) with a piston (3) guided therein which forms a leak gap (10) with the cylinder (2) and behind which an oil-filled pressure chamber (6) communicating with an oil inlet opening (17) via a non-return valve (5) is arranged in the cylinder (2), the tensioner also comprising a compression spring (4) which moves the piston (3) in the tensioning direction out of the cylinder (2), and a pressure medium duct (9) arranged in the piston (3) and communicating with the pressure chamber (6) via a further non-return valve (7, 20), a leak gap for reducing the amount of oil flowing out of the piston (3) being associated with the pressure medium duct (9), characterized in that the further non-return valve is configured as a needle valve (20) formed by a receiving bore (22) situated in the piston (3) and a valve needle (21) inserted therein, an additional leak gap (23) being located between the valve needle (21) and the receiving bore (22).

6. Tensioner according to claim 5, characterized in that the axial length of the valve needle (21) is larger than the length of the receiving bore (22).

7. Tensioner according to claim 5 or 6, characterized in that the part of the pressure medium duct (9) facing away from the pressure oil chamber (6) and located behind the needle valve (20) opens into the end face (24) of the piston (3).

## Revendications

1. Tendeur hydraulique de courroies ou de chaînes comprenant un cylindre (2) et un piston (3) guidé dans celui-ci et formant avec le cylindre (2) un intervalle de fuite (10), une chambre de pression (6) remplie d'huile et qui communique avec un orifice d'entrée d'huile (17) par un clapet anti-retour (5) étant agencée derrière le piston (3) dans le cylindre (2), le tendeur comprenant en outre un ressort de pression (4) qui déplace le piston (3) hors du cylindre (2) dans la direction de tensionnement, et un conduit (9) de milieu sous pression disposé dans le piston (3) et qui communique avec la chambre de pression (6) par un autre clapet anti-retour (7, 20), un intervalle de fuite étant associé au conduit (9) de milieu sous pression afin de réduire la quantité d'huile s'échappant du piston (3), caractérisé en ce que l'intervalle de fuite du conduit (9) de milieu sous pression fait partie de l'intervalle de fuite (10) qui se trouve entre le cylindre (2) et le piston (3).

2. Tendeur selon la revendication 1, caractérisé en ce que le conduit (9) de milieu sous pression est relié à l'intervalle de fuite (10) par un alésage radial (18) du piston (3), l'intervalle de fuite associé au conduit (9) de milieu sous pression étant constitué par la longueur axiale de l'intervalle de fuite (10) résultant entre l'alésage radial (18) et l'extrémité ouverte (13) du cylindre (2).

3. Tendeur selon la revendication 2, caractérisé en ce que l'alésage radial (18) débouche dans une rainure annulaire (19) usinée à la surface périphérique du piston (3).

4. Tendeur selon l'une des revendications 1 à 3, caractérisé en ce que l'autre clapet anti-retour est un clapet anti-retour (7) à bille.

5. Tendeur hydraulique de courroies ou de chaînes comprenant un cylindre (2) et un piston (3) guidé dans celui-ci et formant avec le cylindre (2) un intervalle de fuite (10), une chambre de pression (6) remplie d'huile et qui communique avec un orifice d'entrée d'huile (17) par un clapet anti-retour (5) étant agencée derrière le piston (3) dans le cylindre (2), le tendeur comprenant en outre un ressort de pression (4) qui déplace le piston (3) hors du cylindre (2) dans la direction de tensionnement, et un conduit (9) de milieu sous pression disposé dans le piston (3) et qui communique avec la chambre de pression (6) par un autre clapet anti-retour (7, 20), un intervalle de fuite étant associé au conduit (9) de milieu sous pression afin de réduire la quantité d'huile s'échappant du piston (3), caractérisé en ce que l'autre clapet anti-retour est configuré sous la forme d'un clapet (20) à aiguille qui est formé par un alésage de réception (22) disposé dans le piston (3) et une aiguille de clapet (21) insérée dans celui-ci, un intervalle de fuite supplémentaire (23) se trouvant entre l'aiguille de clapet (21) et l'alésage de réception (22).

6. Tendeur selon la revendication 5, caractérisé en ce que la longueur axiale de l'aiguille de clapet (21) est supérieure à la longueur de l'alésage de réception (22).

7. Tendeur selon la revendication 5 ou 6, caractérisé en ce que la partie du conduit (9) de milieu sous pression détournée de la chambre de pression (6) et située derrière le clapet (20) à aiguille débouche sur la face frontale (24) du piston (3).
